# EUROPEAN PATENT APPLICATION

(11) **EP 0 572 904 A2**
(43) Date of publication of application: **08.12.1993**
(21) Application number: 93108454.5
(22) Date of filing: 25.05.1993
(51) Int. Cl.: H04N 7/13, H04N 7/137, H04N 5/14

(54) **Moving picture encoding apparatus and method**

(30) Priority: 29.05.1992 JP 163833/92
(71) Applicant: SONY CORPORATION, Tokyo (JP)
(72) Inventor: Ikuo, Tsukagoshi, Shinagawa-ku, Tokyo (JP)
(74) Representative: Melzer, Wolfgang, Dipl.-Ing.

(57) **Abstract**

In a picture encoding apparatus, detection of a moving vector of half-pixel precision is executed by using a single clock without increasing the number of frame memories.

Time-series input pixel data is transformed into parallel pixel data; the parallel pixel data obtained through the transformation is interpolated to thereby generate interpolating data on each pixel in an area specified by a moving vector of one-pixel precision. The interpolation data is output in parallel as pixel data on a plurality of interpolation block areas (B1, B2) obtained by displacing by 1/2 pixel the block area (B1, B2) specified by the moving vector at one-pixel unit, thereby making it possible to quickly obtain interpolation data solely on a region around the area specified by the moving vector at one-pixel unit.

With this arrangement, interpolation can be executed with a substantially simplified construction as compared to the prior art, making it possible to easily detect a moving vector of half-pixel precision without increasing the number of frame memories of clock frequency.

## Description

### BACKGROUND OF THE INVENTION

### FIELD OF THE INVENTION

This invention relates to a moving picture encoding apparatus, and more particularly, is applicable to one in which picture data is performed in high efficiency coding, so as to compress the quantity of data to be transmitted.

### DESCRIPTION OF THE RELATED ART

For efficient transmission of a moving picture, in conventional picture encoder, a moving vector of transmitting picture is obtained previously before encoding the picture, so as to encode a picture data corresponding to this moving vector.

Such an encoder which encodes a picture data corresponding to the moving vector, is disclosed in such as U.S. patent Nos. 4,982,285, 4,985,768, and 4,985,768.

Generally, it is considered that the moving picture has a high correlation between picture signals of two successive frames, except for scene changes of the picture. Differences of pixel data between frames of the picture are also obtained and are successively encoded so that compress a data quantity can be compressed.

However, if only obtaining a difference between frames in which there are moving portions, the data quantity of difference becomes to increase.

For this reason, a method of block matching is used.

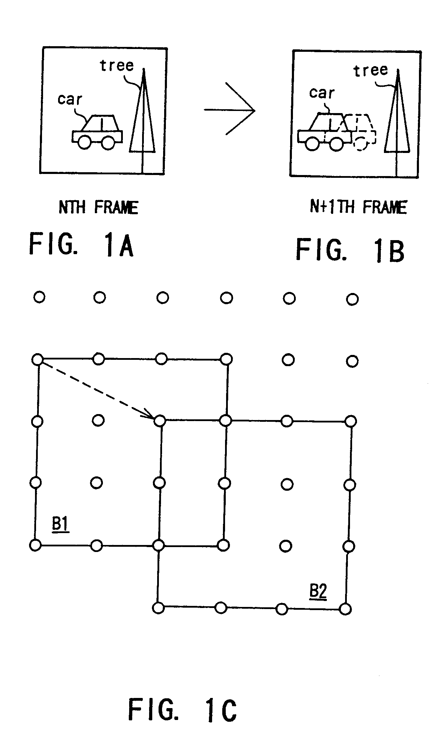

Figs. 1A to 1C are diagrams explaining with the principle of this block matching. The nth frame (Fig. 1A) and the n+1th frame (Fig. 1B) are compared. In these frames, an image portion of "tree" is almost no change, therefore if the image portion of the "tree" of the n+1th frame (Fig. 1B) is replaced with the image portion of the "tree" of the nth frame (Fig. 1A), the error is almost never felt.

On the other hand, an image portion of the "car" cannot replaced like that. That is, the image portion of the "car" of the n+1th frame (Fig. 1B) has moved greatly with time, as compared with the image portion of the "car" of the nth frame (Fig. 1A). This change of position based on the movement of the "car" is shown with solid lines and dotted lines in the n+1th frame of Fig. 1B .

By the way, in the nth frame (Fig. 1A) and the n+1th frame (Fig. 1B), there are almost no change in the shapes of the "car"s which thereby can be considered to be same each other. That is, it is considered that the block existing the "car" in the nth frame (Fig. 1A) is moved horizontally to the position of the block existing the "car" in the n+1th frame (Fig. 1B). In the case of movement of the block, the moving direction and the moving quantity of which are computed as a moving vector, the data quantity can be reduced by using the moving vector.

Obtaining a state where the blocks are optimum accordant with each other between frames, is called a method of block matching. With block matching, a moving vector is not obtained immediately. That is, as shown in Fig. 1C, in a predetermined area of the frame, a block of previous frame (B1) is sequentially moved to the upper, lower, left and right at pixel unit, on the basis of a moving vector of previous frame, so that a difference of each pixel of previous frame consisting the slided block from a pixel of current frame is obtained. Obtaining a block position (B2) where this difference is minimum, and compressing the data quantity by using the moving quantity of block in that case, is in general.

Here, the picture encoding apparatus moves previous frame in the x and y directions on the basis of the moving vector of the previous block in such a way that a moving vector which minimizes the sum of difference absolute value with respect to the current block and the block moved in each direction is decided as the moving vector of the current block.

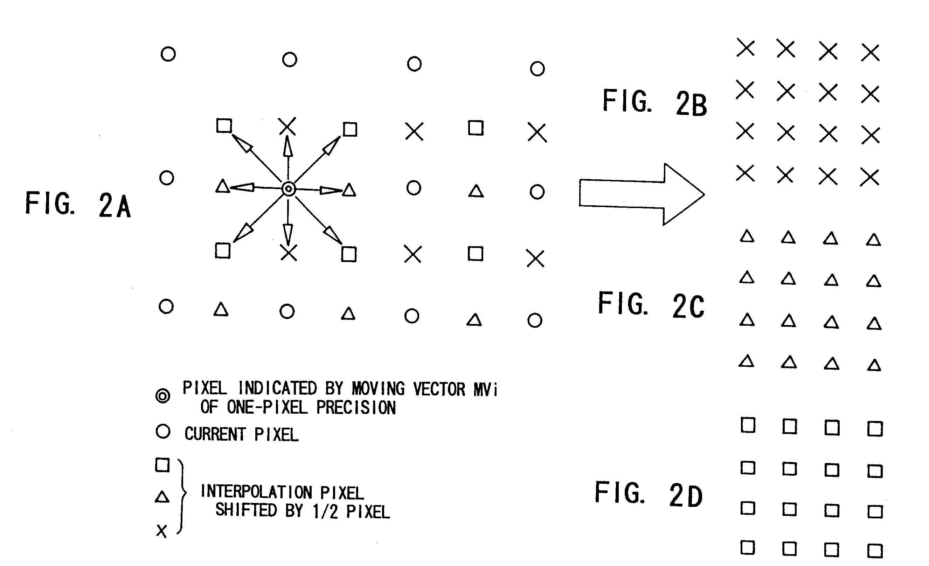

The method obtaining such a moving vector, will be described in Fig. 2.

Firstly, a moving vector is obtained with respect to each block at one-pixel unit. Further, a moving vectors Vi obtained at half-pixel unit which are indicated by □, Δ and × by using a pixel (indicated by a mark ⓞ) given by the moving vector MVi as the center is synthesized with the moving vector at one-pixel unit to obtain a moving vector MVH (=MVi+Vi) at half-pixel unit.

For example, in the case of a block consisting of 8 (in the horizontal direction) x 8 (in the vertical direction) pixels, moving vectors at one-pixel unit are obtained once for each block with respect to 64 clocks; in this while, the corresponding block is displaced in accordance with the moving vector (i,j), and, using that as a starting point, 10 (in the horizontal direction) x 10 (in the vertical direction) data are read at one-pixel unit from (i-1, j-1) to (i+8, j+8), thereby terminating the interpolation processing.

Here, when the moving vector MVH is detected at half-pixel unit, a search area with double density is formed by obtaining interpolating points (indicated by the marks □, Δ and ×) between adjacent pixels (indicated by a mark ⓞ). Then, matching of the search area is performed with respect to the current block serving as the reference, thereby detecting the moving vector MVH.

As a method of detecting such a moving vector at half-pixel unit, there may be considered a method in which interpolation is performed beforehand over the entire search area, as a result pixel data on the interpolating points are stored in frame memory.

In that case, 10 (in the horizontal direction) x 10 (in the vertical direction) pixel data must be read between 64 clocks to execute half-pixel interpolation, so that it is necessary to execute the operation of interpolation using clocks faster than ordinary ones.

However, in this case, it will be needed that clocks being at rate of 64:100 are generated in a PLL (Phase Locked Loop) circuit. In such a case, since the clock ratio of the PLL is not simple integer ratio there is a problem that a non-synchronous system is involved, and a circuit construction for synchronization is complicate.

As the other method, it is considered that the computation of interpolating data is previously stored in frame memory.

In this case, a moving vector which minimizes the difference absolute value sum can be reliably located at half-pixel unit. However, since the number of pixels needed for interpolation is larger than the number of pixels to be subjected to block matching. It is necessary to make the speed of the block matching processing four times higher or to provide a processing circuit for block matching of four times in scale.

Thereby, none of these two cases are practical enough in terms of system construction.

### SUMMARY OF THE INVENTION

In view of the foregoing, an object of this invention is to provide a picture encoding apparatus which is capable of executing a series of processing by using a single clock system without increase in the number of frame memories.

The foregoing object and other objects of the invention have been achieved by the provision of a picture encoding apparatus in which a moving vector MVi at one-pixel unit of a previous unit block corresponding to a current unit block is obtained; a moving vector MVH at half-pixel unit is detected on the basis of the moving vector MVi at one-pixel unit; coefficient data obtained through orthogonal transform of picture data which has undergone movement compensation with the moving vector MVH is quantized with a predetermined quantizing step size; as a result, input picture data is encoded in high efficiency. The picture encoding apparatus comprises: pixel data parallel transforming means for successively transforming time-sequentially input picture data into parallel pixel data; interpolation data generating means for interpolating the parallel pixel data obtained through transformation by the pixel data parallel transforming means to generate interpolation data on each pixel in an area specified by the moving vector MVi at one-pixel unit; and interpolation block generating means for outputting in parallel the interpolation data output from the interpolation data generating means as pixel data within a plurality of interpolation block areas being displaced by 1/2 pixel a block area specified by the moving vector MVi at one-pixel unit wherein the difference between the pixel data on the plurality of interpolation block areas output from the interpolation block generating means and pixel data on the current unit block is obtained; the moving vector MVH at half-pixel unit is decided on the basis of displacement to an interpolation block which minimizes the difference therebetween.

By detecting a moving vector at half-pixel unit on the basis of interpolation data within a region with specified with the moving vector MVi at one-pixel unit and the area around the region, the number of frame memories can be reduced as compared with the prior art.

Further, by generating interpolation data from parallel picture data being parallel leaved alone, the interpolation processing can be increased in processing rate, so that it is possible to detect the moving vector MVH at half-pixel unit without increase in clock frequency.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Figs. 1A to 1C are schematic charts for illustrating a block matching processing;
Figs. 2A to 2D are schematic charts for illustrating a block-parallelizing processing;
Fig. 3 is a block diagram showing the overall construction of a picture encoding apparatus according to the present invention;
Fig. 4 is a block diagram showing the construction of a movement detecting circuit section;
Fig. 5 is a block diagram showing an embodiment of the parallelizing circuit of the present invention;
Fig. 6 is a block diagram showing an embodiment of the half-pixel interpolating circuit and the block parallelizing circuit;
Fig. 7 is a timing chart showing pixel data written and read by means of write and read signals supplied to an FIFO memory;
Fig. 8 is a timing chart showing pixel data written and read by means of write and read signals supplied to the FIFO memory;
Fig. 9 is a block diagram for illustrating a moving vector determinating circuit;
Fig. 10 is a schematic chart showing the relationship between interpolation pixels and original pixels in a compressed plane; and
Fig. 11 is a schematic chart showing the relationship between interpolation pixels and original pixels in a picture plane.

### DETAILED DESCRIPTION OF THE EMBODIMENT

Preferred embodiments of this invention will be described with reference to the accompanying drawings:

### (1) General Construction of the Embodiment

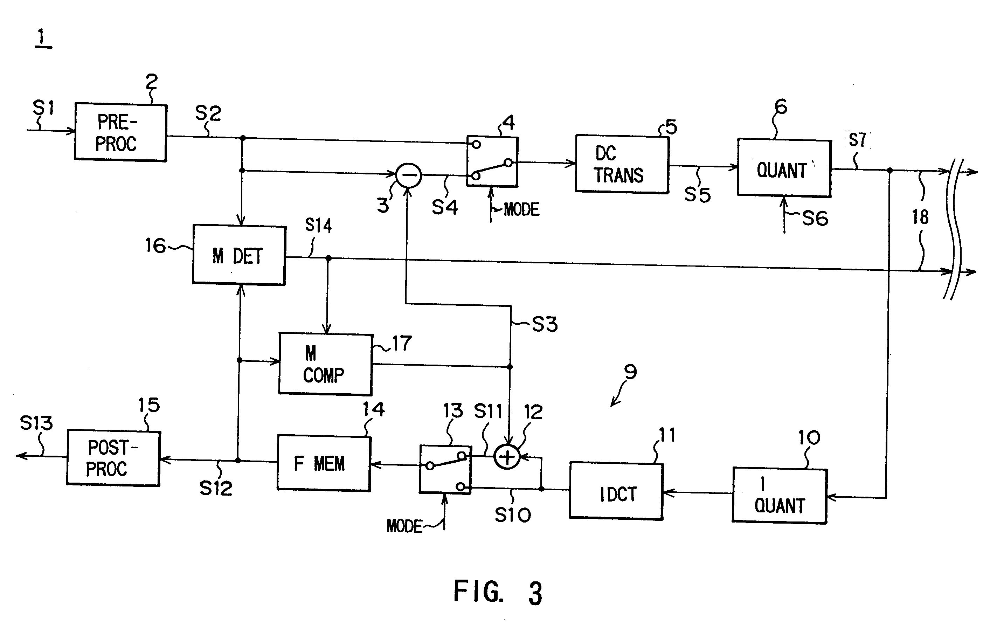

Referring to Fig. 3, numeral 1 generally indicates a picture encoding apparatus. Upon successive input of an analog picture signal S1, a pre-processing circuit 2 transforms it into digital data. The pre-processing circuit 2 comprises internally a matrix circuit and an analog/digital conversion circuit (not shown).

In this embodiment, the analog signal S1 is color video signal. In the pre-processing circuit 2, the color video signal is separated into a luminance signal and a color difference signal. This embodiment is applied to a luminance signal processing device. This invention may be applicable to a color difference signal processing device, without departing from the spirit of this invention.

Further, the pre-processing circuit 2 may be a constitution for separating a luminance signal and a color difference signal from a color video signal , or for separating an original color signal of RGB from it. In this case also, this invention may be applied to each original color signal.

In this pre-processing circuit 2, this digital data is fractionized into blocks at a certain number of pixels unit to form a block picture data S2. Here, 8 x 8 pixels, and 16 x 16 pixels and so on are optimum constitution as a block. Further, this embodiment shows the case where frame is a unit, however, it is capable of the case where a field is a unit.

The block picture data S2 from the pre-processing circuit 2 is supplied to a difference data generating circuit 3, the first switching circuit 4 and the discrete cosine transform circuit 5.

The difference data generating circuit 3 obtains the difference between the block picture data S2 and a movement compensation data S3, thereby obtaining the intra-frame difference between a movement compensation picture which is obtained by performing movement compensation on the picture of the previous frame and the current input picture. The difference value is supplied to the first switching circuit 4 as difference data S4.

At this time, the first switching circuit 4 is controlled to switch in accordance with a transmission mode, and delivers either of the block picture data S2 and the difference data S4, which is the least in the sum of the difference absolute value from the average level in block, to a discrete cosine transform circuit 5.

In this connection, a case where transmission can be effected with less amount of data in intra-field encoding will be referred to as an intra-frame coding mode, and a case where transmission can be effected with less amount of data in inter-frame encoding will be referred to as an inter-frame coding mode.

The discrete cosine transforming circuit 5 performs orthogonal transform on the block picture data S2 or the picture data for block units input as a difference data S4 by means of the discrete cosine transform equation, and supplies the coefficient data S5 thereof to a quantizing circuit 6.

Note that, in this embodiment, the discrete cosine transform is used, however, it is evident that the other orthogonal transform, for example, FFT is also applicable. And the Wavelet transform or the Haar transform is also applicable.

The quantizing circuit 6 quantizes the transformed data S5 on the basis of a quantizing step size controlling signal S6 with a predetermined quantizing step size, and supplies the quantized data S7 to a stage processing circuit (not shown) which consists of a variable-length coding circuit and so on.

Further, this picture encoding apparatus has a local decoding circuit system 9, which makes it possible to confirm the transmitting picture on the encoding side.

That is, the local decoding circuit system 9 performs local decoding of the quantized data S7 successively through an inverse quantizing circuit 10 and an inverse discrete cosine transform circuit 11, so as to supply locally decoded data S10 to a synthesized data generating circuit 12 and a switching circuit 13.

When the transmitting mode previous block picture is transmitted in the inter-frame coding mode, the second switching circuit 13 supplies decoded block picture data S11 restored by synthesizing the movement compensation data S3 with the locally decoded data S10 to a previous frame memory 14.

On the other hand, when the previous block picture is transmitted in the intra-field coding mode, the second switching circuit 13 supplies the locally decoded data S10 successively to the previous frame memory 14.

The frame memory 14 replaces each block of the previous frame by the locally decoded data S10 or the decoded block picture data S11 to regenerate the frame picture of the previous frame. And it supplies the picture data of that block of the previous frame picture which corresponds to the block picture data S2 to a post stage processing circuit 15 as a search window S12.

In this connection, the post stage processing circuit 15 transforms the search window S12 input for each block into a scanning line signal, i.e., a line sequence signal. Further, this scanning line signal is converted into analog signal by an internal digital/analog converting circuit (not shown), and is outputted as decoded video signal S13.

Here, a movement detecting circuit section 16 compares the current block picture data S2 with the search window S12 supplied from the frame memory 14, to obtain a moving vector MVH at half-pixel unit of the current block picture with respect to the previous block picture. The moving vector signal S14 is outputted to the movement compensating circuit 17 and the transmitting path 18.

Note that, the data outputted to the transmitting path 18 is processed by means of an error correcting circuit and a demodulator and so on (not shown), goes on the air and is recorded to recording media.

An optical disc is suitable applied to recording media.

The movement compensation circuit 17 shifts the block picture of the previous frame on the basis of the amount of movement given by the moving vector signal S14 to supply it to the difference data generating circuit 3 and the synthesized data generating circuit 12 as movement compensation data S3.

### (2) Construction of Movement Detecting Circuit Section 16

The movement detecting circuit section 16 first obtains a moving vector MVi at one-pixel unit, and then obtains interpolation pixels from the original pixels within only a region around the pixel specified by the moving vector.

That is, the movement detecting circuit section 16 obtains a matching of the search range formed by the interpolation pixels to the current block. This moving vector at one-pixel unit is used as the center, block matching process is performed at half-pixel unit to the search areas displaced by -1, 0 and +1 in the x and y directions. The amount of displacement to the block having the minimum difference absolute value sum is established as a moving vector Vi in the half-pixel area; and the moving vector Vi is synthesized with the moving vector MVi previously obtained at one-pixel unit, so that a moving vector MVH is obtained at half-pixel unit.

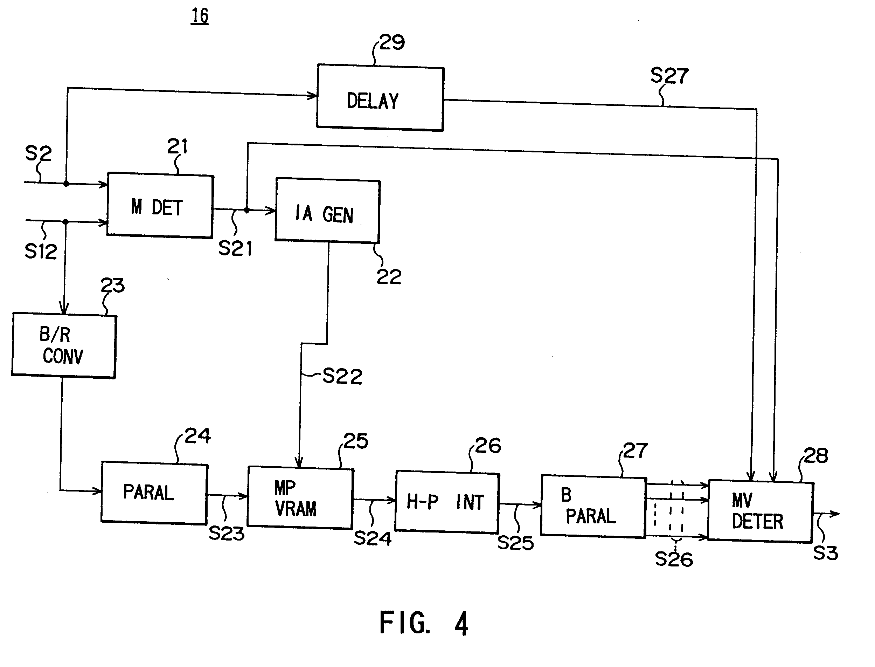

The concrete construction of the movement detecting circuit section 16 is shown in Fig. 4.

The movement detecting circuit 21 obtains the moving vector MVi at one-pixel unit from the picture data S2 and the search window S12 to supply it to an interpolation address generating circuit 22 as moving vector data S21.

The interpolation address generating circuit 22 consists of a read-only memory, and converts the pixel positions indicated by the moving vector MVi into corresponding address data to output it as interpolation address data S22.

Here, the movement detecting circuit section 16 converts the search window S12, which is input at block unit, into raster signals by means of a block/raster converting circuit 23, and the raster signals after converting is output from a parallelizing circuit 24 as serial data S23, which is successively written into a multi-port VRAM (Video Random Access Memory) 25.

At this time, the multi-port VRAM 25 delivers the pixel data of a region which is required to execute interpolation on the basis of the interpolation address S22 input from the interpolation address generating circuit 22 so as to supply pixel data S24 to a half-pixel interpolating circuit 26.

The half-pixel interpolating circuit 26 generates interpolation data S25 from the input picture data S24, and then generates picture data S26 of nine blocks inclusive of the one indicated by the moving vector MVi at one-pixel unit by means of a block parallelizing circuit 27 to supply the data to a moving vector determinating circuit 28.

Here, the moving vector determinating circuit 28 obtains difference absolute value sums between a delay block picture data S27 input through a delay circuit 29 and the 9 parallel picture data S26, and then obtains that parallel picture data of the 9 parallel picture data S26 with which the difference absolute value sum is minimum, as a result the displacement to that block is established as the moving vector Vi in the half-pixel range.

With this arrangement, the moving vector determinating circuit 28 outputs a moving vector MVH, which is obtained by synthesizing the moving vector Vi in the half-pixel range with the moving vector MVi input from the movement detecting circuit 21, as vector data S3 at half-pixel unit.

### (2-1) Construction of Parallelizing Circuit 24 and Multi-port RAM 25

The parallelizing circuit 24 will be described in detail.

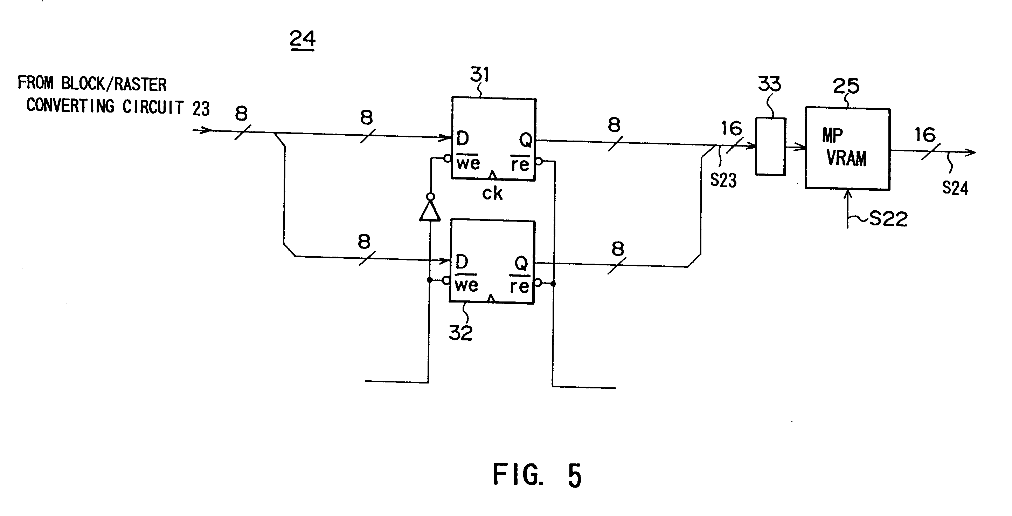

Fig. 5 shows a concrete constitution of the parallelizing circuit 24. In this constitution, the parallelizing circuit 24 is composed of two sets of FIFO (First In First Out) memories 31 and 32 which alternately become active, and arranges the picture data successively input from the block/raster converting circuit 23 in two-bit groups, so that 16-bit signal is output as serial data S23. That is, pixel data "0, 1, 2, 3, 4, 5, ..." is arranged in "0, 2, 4, ...", "1, 3, 5, ..." to output it as serial data S23.

Here, the address provided by the multi-port VRAM 25 are such that one address corresponds to the 2-pixel data input from the address parallelizing circuit 24 through a delay circuit 33, so that the address space is reduced to half. Hereinafter it referred to as "compressed plane".

In this compressed plane, assuming that, with the picture data of 16-bit length, the 8 bits on the side of the most significant bit and the 8 bits on the side of the least significant bit are the high-order bit sequence and the low-order bit sequence, respectively, therefore it is possible to provide the picture data complimentarily into high-order bit sequence and low-order bit sequence.

### (2-2) Construction of Half-Pixel Interpolating circuit 26 and Block Parallelizing Circuit 27

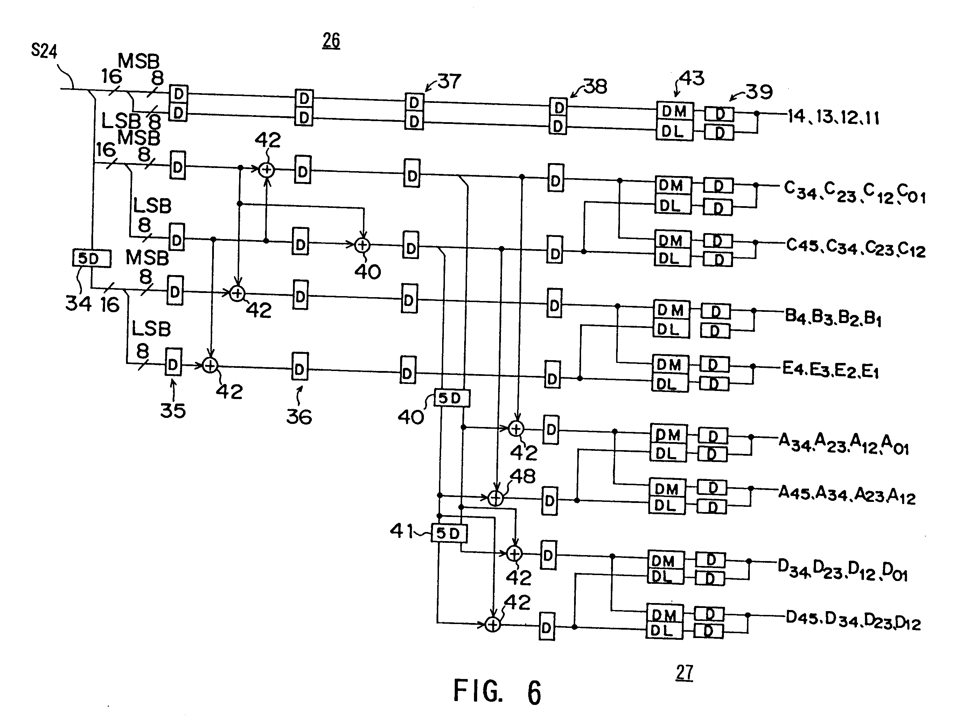

The half-pixel interpolating circuit 26 and the block parallelizing circuit 27 are constructed as shown in Fig. 6.

The half-pixel interpolating circuit 26 performs data interpolation in a parallelized state, and the block parallelizing circuit 27 block-parallelizes the interpolated data, thereby making it possible to obtain the difference absolute value sum of each block for one-block period.

In Fig. 6, the half-pixel interpolating circuit 26 branches 16-bit picture data S24 input in 3-sequence parallel, into high-order and low-order 8 bits, i.e., in two parallel sequences with respect to the picture data of the high-order bit sequence DM and that of the low-order bit sequence DL, forming pixel data of 6-sequence parallel in total.

Further, the half-pixel interpolating circuit 26 branches these six high-order bit sequence MD and four the low-bit sequences into two parallel sequences successively through delay circuits 36 and 37, thereby branching the four sequences of high-order and low-order bit sequences into eight sequences in total.

Here, two adder circuits 42 add the high-order bit sequence pixel data and the low-order bit sequence pixel data respectively in such a manner that pixel data is generated on the interpolation pixels from the pixel data of the original pixels.

On the other hand, the block parallelizing circuit 27 is supplied 2-sequence picture data obtained through 1-step branching only and 8-sequence picture data obtained through 2-step branching through a delay circuit 38. This picture data is further transformed to 9-parallel picture data S26 through a FIFO memory group 43 and a delay circuit group 39.

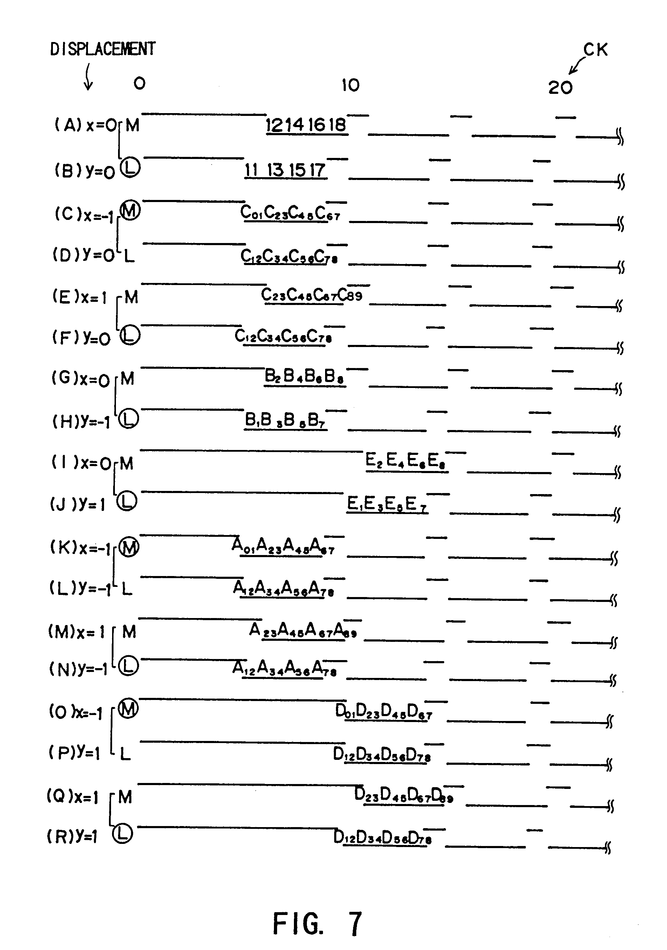

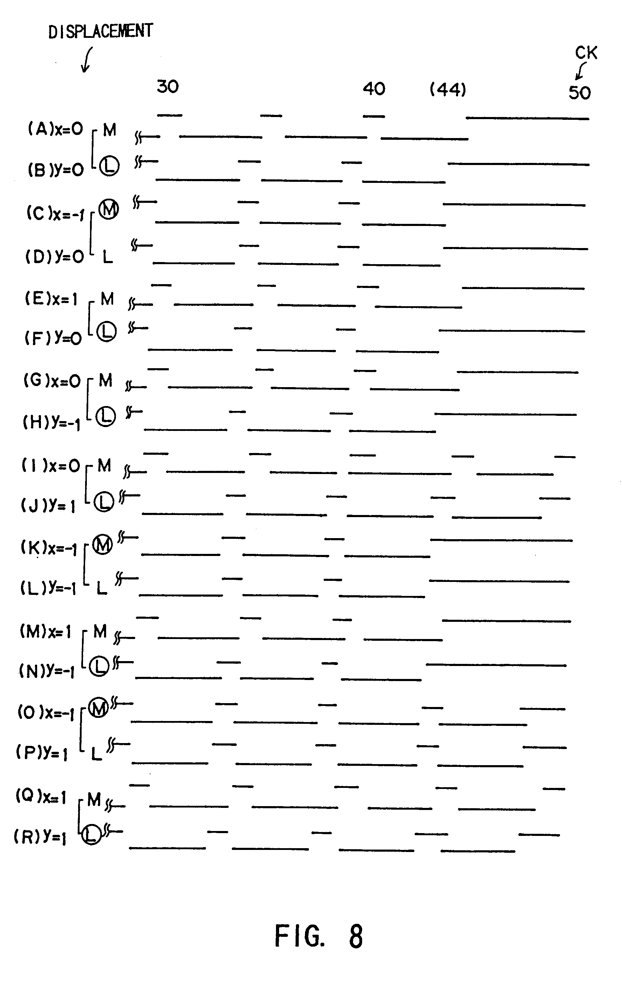

In Figs. 7 and 8, is a diagram explaining a write-in operation and a read-out operation of the FIFO memory group 43. The detailed operation will be described later.

The FIFO memory group 43 performs to write data by a writing pulse (-we) and to read the written data by a reading pulse (-re).

### (2-3) Construction of Moving Vector Determining Circuit 28

Fig. 7 shows a construction of a moving vector determining circuit 28.

The moving vector determining circuit 28 has nine sets of difference absolute value sum calculating sections 50 (50A, 50B, ..., 50I), by means of which the respective difference absolute values with respect to the interpolation pixels of 9 channels is obtained. Hereinafter, the operation will be described, as an example of one set of difference absolute sum calculating section 50A.

Here, the difference absolute value sum calculating section 50A obtains, by means of a subtracting circuit 52A, the difference of the interpolation data S26 with respect to the picture data S27 input through a delay circuit 51A, and outputs the result of the subtraction as residual block data S30.

At this time; the difference absolute value sum calculating section 50A sets the residual block data S30 for absolute value, by means of an absolute value circuit 53A. Further, this absolute value obtains difference absolute values successively through an integration circuit 54A and delay circuits 55A and 56A, so as to output the same to a minimum value discriminating circuit 57 as difference absolute value signals S31.

In this connection, the difference absolute value signals S31A to S31I respectively indicate the difference absolute value with respect to the pixel indicated by the moving vector at one-pixel unit, that is, from the difference absolute value of the pixel displaced by -1/2 pixel in the x-direction to the difference absolute value of the pixel displaced by 1/2 pixel in the x and y-directions with respect to the given pixel.

After that, a read-only memory 58 is supplied from the minimum value discriminating circuit 57 the residual block at half-pixel unit which minimizes the difference absolute value, and then outputs a corresponding moving vector Vi in the written moving vectors.

Lastly, a vector synthesizing circuit 59 synthesizes this moving vector Vi with a moving vector MVi at one-pixel unit given by the movement detecting circuit 21 to output a moving vector MVH of half-pixel precision.

### (3) Operation and Effects of the Embodiment

In the above construction of this embodiments, the operation will be described in detail.

In Fig. 3, the block picture data S2 output from the pre-processing circuit 2 of the picture encoding apparatus, and the search window S12 output from the frame memory 14, are provided to the movement detecting circuit section 16.

In the movement detecting circuit section 16 of Fig. 4, the block picture data S2 is provided to the movement detecting circuit 21, so as to obtain a moving vector MVi of one-pixel precision.

On the other hand, the search window S12 is provided to the block/laster converting circuit 23 to be further outputted from the parallelizing circuit 24 as the pixel data S24, which is then provided to the multi-port VRAM 25, so that a detection of moving vector of half-pixel precision, that is center around the moving vector MVi at one-pixel unit and lay emphasis on the around area, is performed.

At this time, the addresses of the multi-port VRAM 25 are such that, since one address corresponds to 2-pixel data input from the address parallelizing circuit 24 through the delay circuit group 33, half the address space becomes half. Hereinafter, this plane which is shown by the half address space, is referred to as "the compressed plane".

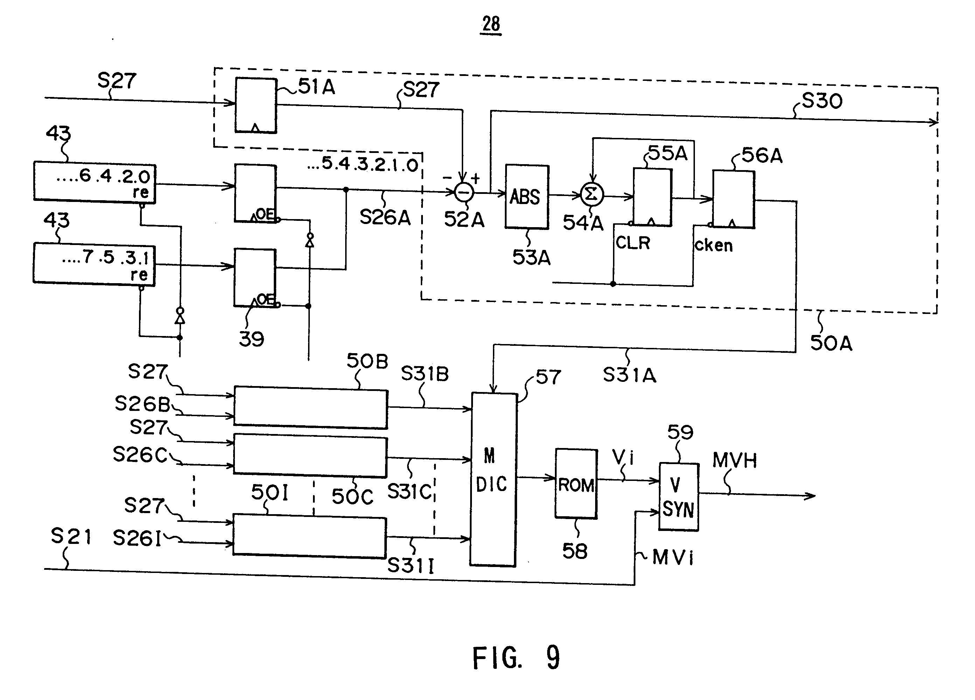

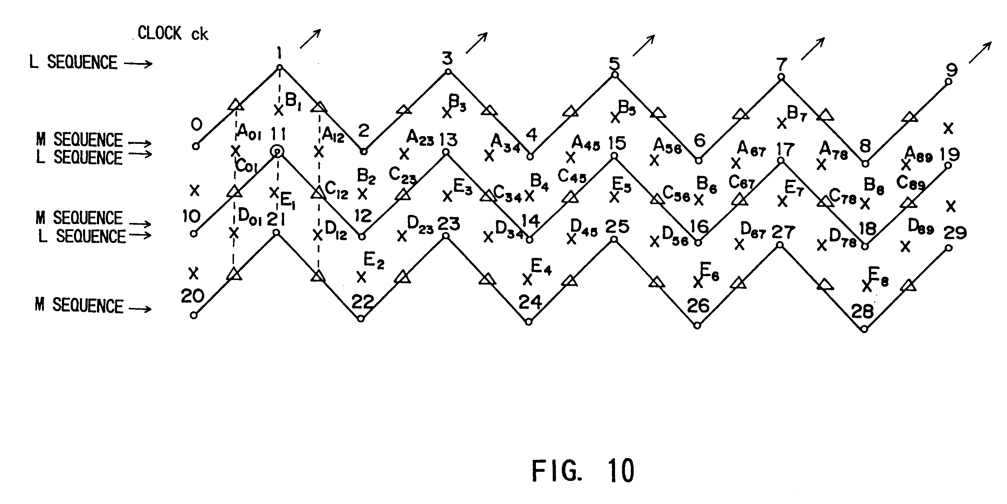

Here, the state where the pixel data is read will be described in Fig. 10 shown typically with the compressed plane and in Fig. 9 shown typically with the picture plane.

In both planes, a mark of ○ shows an original pixel, marks of Δ and × show half-pixels, and a mark of ⓞ shows a moving vector at one-pixel unit. In Figure, numeral 11 shows with the mark of ⓞ.

In the compressed plane of Fig. 10, the half-pixel which is formed by interpolation from original pixels of address "0" and address "1", is shown with a mark of Δ on segment of a line 0 - 1. Similarly, the half-pixel which is formed by interpolation from original pixels of an address "1" and an address "2", is shown with a mark of Δ on segment of a line 1 - 2.
Hereinafter, it is similarly.

The half-pixel of a mark of X is formed by interpolation, according to original pixels of a mark of ○ where the upper and lower parts of that or the half-pixel of a mark of Δ, as shown with a dotted line.

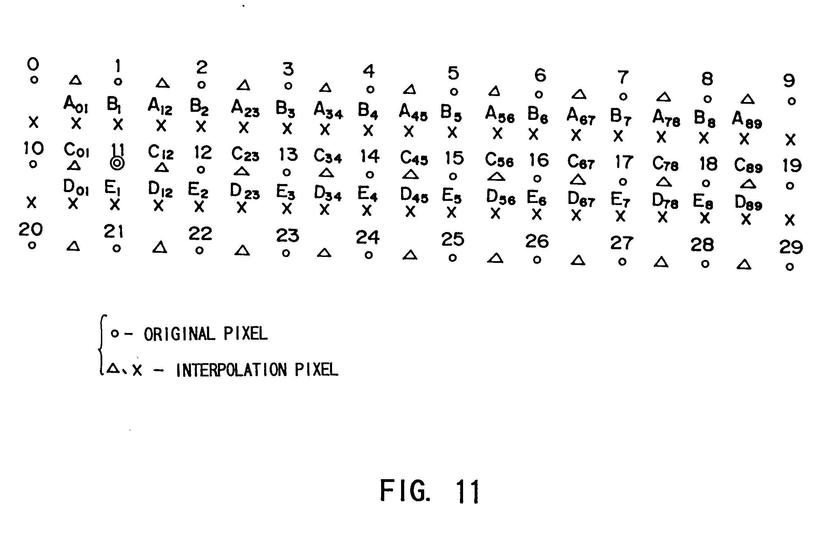

In like manner, there is the same relation in the picture plane of Fig. 11.

In Fig. 6, to generate the interpolation pixels, the half-pixel interpolating circuit 26 starts to successively read pixel data from the multi-port VRAM 25 so as to start from the pixel corresponding to the relative address number of 0. As shown in Fig. 10, the interpolation process at this time consists in the interpolation in the x-direction between high-order-bit and low-order-bit sequences of the same address, and between low-order-bit sequences and high-order-bit sequences of the next address.

On the other hand, in the y-direction, interpolation is effected alternately between high-order-bit sequences and between low-order-bit sequences by a delay line corresponding to one block in the x-direction of the compressed plane.

The series of processing in this compressed plane lead results in points of half-pixel precision in the picture plane, making it possible for the calculation for the interpolation of 10 x 3 pixels to be performed with 5 x 3 clocks, i.e., with half the number of clocks.

After the above interpolation, the block parallelizing circuit 27 effects phase difference control between the interpolation points by means of the FIFO memory 43 to advance to the block parallelizing operation.

Here, the block parallelizing circuit 27 writes only the requisite data for each block to the FIFO memory 43 by transmitting a write pulse thereto and, after a fixed period, causes reading to be started with respect to the FIFO memory 43.

At this time, a read pulse is complimentarily imparted in high-order-bit and low-order-bit sequences to the FIFO memory 43, as previously described in Figs. 5 and 6.

At this time, the figures in Figs. 7 and 8 agree with the data in Figs. 10 and 11; the writing to the FIFO memory 43 is performed when the write pulse (-we) is at a low level (that is, in the logically "L" state), and the read pulse (-re) is started after a fixed period of time.

In this connection, the read pulse (-re) itself is of a clock-alternate type, enabling the 8-bit data of the high-order and low-order sequences to be read complimentarily.

For this purpose, it is necessary for reading to be started from the sequence indicated by O in Figs. 7 and 8.

At this time, of the 9 parallel sequences, the earliest end of writing with respect to the FIFO memory 43 is given by the 44th clocks as counted from the block pulse (once for 64 clocks), as shown in Figs. 7 and 8.

In this manner, in clock-alternate reading, a length of time corresponding to the full 64 cycles is necessary, so that the reading of the pixel data must be started at a point in time 20 clocks (= 64 - 44) earlier than the termination of the current block at the latest. If the above conditions are satisfied, the writing of the next block is prevented from starting before the reading of the written data of the current block has been started.

In Fig. 6, the block parallelizing circuit 27, in order from above:
(1) block pixel data on the pixel indicated by the moving vector MVi of one-pixel precision, that is, 11, 12, 13 and 14;
(2) block pixel data displaced by -1 in the x-direction with respect to the pixel indicated by the moving vector MVi, that is, C01, C12, C23 and C34;
(3) block pixel data displaced by +1 in the x-direction, that is, C12, C23, C34 and C45;
(4) block pixel data displaced by -1 in the y-direction, that is, B1, B2, B3 and B4;
(5) block pixel data displaced by +1 in the in the y-direction, that is, E1, E2, E3 and E4;
(6) block pixel data displaced by -1 in both the x and y-directions, that is, A01, A12, A23 and A34;
(7) block pixel data displaced by +1 in the x-direction and -1 in the y-direction, that is, A12, A23, A34 and A45;
(8) block pixel data displaced by -1 in the x-direction and +1 in the y-direction, that is, D01, D12, D23 and D34; and
(9) block pixel data displaced by +1 in both the x and y-directions, that is, D12, D23, D34 and D45.

After that, the moving vector detecting circuit 28 obtains the difference absolute value sums between the block pixel data of the given channel and the pixel data of the current block, outputting the minimum value thereof as residual block data S30 at half-pixel unit.

Further, by synthesizing the moving vector Vi which gives that block with the moving vector MVi of one-pixel precision, the moving vector MVH at half-pixel unit is determined and the picture of the current block is successively coded.

With the above construction, the picture data S12 is parallelized by using the parallelizing circuit 24, and then interpolation data which has undergone movement compensation with half-pixel precision with respect to the area around the moving vector at one-pixel unit is obtained by the half-pixel interpolating circuit 26.

Further, by re-arranging this interpolation data by the block parallelizing circuit 27, nine types of interpolation blocks displaced in the x and y-directions are supplied to the moving vector determinating circuit 28, thereby making it possible to easily obtain a moving vector at half-pixel unit by a single clock without increasing the number of frame memories.

Further, by adapting a moving vector at half-pixel unit and reducing the amount of inter-frame difference information, the amount of information generated can be reduced, thereby achieving an improvement in terms of picture quality.

Further, even when the an expensive dedicated LSI for moving vector detection is used, the number of parts can be reduced, thereby realizing a reduction in system costs.

### (4) Other Embodiments

While the above embodiment has been described with reference to a case where the parallelizing circuit 24 is constructed as shown in Fig. 5, the present invention is not limited to this. It is also possible to parallelize a plurality of pixels with a difference circuit configuration.

Also, while the above embodiment has been described with reference to a case where the half-pixel interpolating circuit 26 is constructed as shown in Fig. 6, the present invention is not limited to this. It is also possible to interpolate parallelized data with a different circuit configuration.

Further, while the above embodiment has been described with reference to a case where the block parallelizing circuit 27 is constructed as shown in Fig. 4, the present invention is not limited to this. It is also possible to block-parallelize interpolated data with a difference circuit configuration and timing signal.

Still further, while the above embodiment has been described with reference to a case where movement compensation is effected on only the object range, the present invention is not limited to this. It is also widely applicable to other interpolating circuits in intended for data interpolation.

As described above, in accordance with the present invention, time-sequentially input pixel data is successively transformed into parallel pixel data; the parallel pixel data with a compressed address space is then interpolated to generate interpolation data on each pixel in an area designated by a moving vector at one-pixel unit; and this interpolation data is output in parallel as pixel data on a plurality of interpolation block areas obtained by displacing the block range specified by the moving vector at one-pixel unit by 1/2 pixel, whereby it is possible to detect a moving vector of half-pixel precision by interpolation data solely on a region around the area specified by the moving vector at one-pixel unit.

This makes it possible to execute a high-speed interpolation processing with a substantially simplified construction as compared to the prior art, enabling a moving vector of half-pixel precision to be easily detected without increasing the number of frame memories or raising the clock frequency.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. A picture encoding apparatus (1) wherein a moving picture signal is divided into unit block consisted of plural number of pixels to obtain the moving vector at one-pixel unit of previous unit block with respect to current unit block, and then a moving vector of half-pixel precision is detected on the basis of this moving vector of one-pixel precision, and corresponding to this, a movement compensated picture data is orthogonal-transformed, quantizing thus obtained orthogonal transformed coefficient data with predetermined quantizing step size, so as to high efficiency encode the inputted picture data, said picture encoding apparatus (1) comprising:
pixel data parallel converting means (24) for converting a pixel data input in time series into a pixel data which is parallel sequentially;
interpolating data generating means (26) for interpolating a parallel pixel data converted by said pixel data parallel converting means (24), and for generating the interpolating data with respect to each pixel in designated area, corresponding to said moving vector at one-pixel unit; and
interpolation block generating means (27) for parallel outputting said interpolating data output from said interpolating data generating means (26), as pixel data of a plural number of interpolation block areas that is displaced by half-pixel from the block area designated by said moving vector at one-pixel unit; wherein
obtaining a difference between pixel data of said plural number of interpolation block area output from said interpolation block generating means (26) and pixel data of current unit block; and
determining said moving vector of half-pixel precision, corresponding to a displaced quantity to the interpolation block of which difference is minimum.

2. A picture encoding apparatus of claim 1, wherein:
said pixel data parallel converting means (24) converts a pixel data input continuously in time series, at two-pixels unit into said parallel pixel data, compressing to the half an address space designating said pixel data of unit block.

3. A picture encoding apparatus of claims 1 or 2, wherein:
said pixel data parallel converting means (24) is consisted of two FIFOs at least.

4. A picture encoding apparatus of any of claims 1 to 3, wherein:
said interpolating data generating means (26) generates an interpolating data in the horizontal direction, by alternatively repeating at least, said interpolation of most significant data and least significant data of which said parallel pixel data given same addresses, and an interpolation of least significant data of previous address and most significant data of the next address.

5. A picture encoding apparatus of any of claims 1 to 4, wherein:
said interpolating data generating means (26) generates an interpolating data to the vertical direction, by repeating an interpolation of most significant data and least significant data delayed by unit block to the horizontal direction of said parallel pixel data.

6. A picture encoding apparatus of claim 5, wherein:
said interpolating data generating means (26) branches three types of picture data parallel input into high-order-bit sequences and low-order-bit sequences, by plural of delay circuit, forms six types of pixel data, further in these six types of high-order-bit sequences and low-order-bit sequences, and branches four types of high-order-bit sequences and low-order-bit sequences into eight types of pixel data, by plural number of delay circuits (29), so as to generate an interpolating data by thus obtained picture data.

7. A picture encoding apparatus of any of claims 1 to 6, wherein:
said interpolation block generating means (27) having memory means of previous input/output system, controls to write and read said parallel pixel data to this memory means, and controls phase difference between interpolating data each other.

8. A picture encoding apparatus of claim 7, wherein:
said interpolation block generating means (27) is provided two types of picture data obtained by one-step branching and eight types of picture data obtained by two-steps branching, further these eight types of picture data converts into nine types of parallel picture data by plural number of FIFO memories (43) and plural number of delay circuits (39).
